# EUROPÄISCHE PATENTANMELDUNG

(11) **EP 4 075 623 A1**
(43) Veröffentlichungstag der Anmeldung: **19.10.2022**
(21) Anmeldenummer: 21168753.8
(22) Anmeldetag: 16.04.2021
(51) Int. Cl.: H02J 3/00

(54) **VERFAHREN ZUM BETREIBEN EINER ENERGIEGEMEINSCHAFT**

(71) Anmelder: Siemens AG Österreich, 1210 Wien (AT)
(72) Erfinder: Einfalt, Alfred, 1210 Wien (AT); Engelbrecht, Gerhard, 1050 Wien (AT); Kainz, Juliana, 1070 Wien (AT)
(74) Vertreter: Maier, Daniel Oliver

(57) **Zusammenfassung**

Die Erfindung betrifft ein Verfahren zum Betreiben einer Energiegemeinschaft mit zumindest einer Energieerzeugungseinheit (EZ) und zumindest einer Energiespeichereinheit (SE). Von der Energiegemeinschaft wird ein erster Netzbereich (S1, S2, S3) eines Stromversorgungsnetzes (z.B. lokales Verteilnetz, Teile eines Orts- oder Niederspannungsnetzes, etc.) zumindest teilweise genutzt. Dabei weist der erste Netzbereich (S1, S2, S3) des Stromversorgungsnetz zumindest eine Übergabestelle (TS) zu einem zweiten Netzbereich (z.B. Mittelspannungsnetz) des Stromversorgungsnetzes auf, an welcher Energie mit dem zweiten Netzbereich ausgetauscht wird. Für das Verfahren werden eine vom ersten Netzbereich (S1, S2, S3) aus dem zweiten Netzbereich des Stromversorgungsnetzes bezogene Energiemenge gemessen und ein Energiebedarf der Energiegemeinschaft ermittelt (101). Darauf basierend wird ein Energiegemeinschaftsfaktor bestimmt (102). Anhand dieses Energiegemeinschaftsfaktors und einer zu einem jeweiligen Zeitpunkt aktuell gemessenen Energiemenge, welche vom ersten Netzbereich (S1, S2, S3) an der zumindest einen Übergabestelle (TS) mit dem zweiten Netzbereich ausgetauscht wird, wird eine zum jeweiligen Zeitpunkt aktuell mögliche Übergabeleistung der Energiegemeinschaft abgeschätzt (103). Die für den jeweiligen Zeitpunkt abgeschätzte, aktuell mögliche Übergabeleistung wird dann mit einer zum jeweiligen Zeitpunkt von der zumindest einen Energieerzeugungseinheit (EZ) erzeugten Energiemenge verglichen (104). Daraus werden dann Steuerungsdaten für die zumindest eine Energiespeichereinheit (SE) der Energiegemeinschaft abgeleitet (105).

## Beschreibung

### Technisches Gebiet

Die gegenständliche Erfindung betrifft allgemein das Gebiet der Energieversorgung und des Energiemanagements. Im Speziellen bezieht sich die vorliegende Erfindung auf ein Verfahren zum Betreiben einer Energiegemeinschaft, wie z.B. einer so genannten Local Energy Community (LEC) oder einer Mieterstrommodell-Gemeinschaft, welche zumindest eine Energieerzeugungseinheit und zumindest eine Energiespeichereinheit aufweist, die von Energieerzeugungsgemeinschaft gemeinschaftlich betrieben bzw. genutzt werden. Weiterhin wird von der Energiegemeinschaft ein erster Netzbereich eines Stromversorgungsnetzes (z.B. lokales Niederspannungsnetz, Ortsnetz, etc.) genutzt, wobei der erste Netzbereich zumindest eine Übergabestelle zu einem zweiten Netzbereich (z.B. öffentliches bzw. übergeordnetes Niederspannungs- bzw. Ortsnetz, Mittelspannungsnetz, etc.) des Stromversorgungsnetzes aufweist, an welcher Energie zwischen dem ersten Netzbereich und dem zweiten Netzbereich des Stromversorgungsnetzes ausgetauscht wird.

### Stand der Technik

Für eine nachhaltige Energieversorgung mittels so genannter erneuerbaren Energie, insbesondere mittels Sonnenenergie und/oder Windenergie, und damit für eine Energiewende werden zukünftig Energiegemeinschaften sowie eine gemeinschaftliche Nutzung alternativer Energieerzeugungseinheiten, wie z.B. Photovoltaikanlagen, Kleinwasserkraftwerke, Blockheizkraftwerke, Windenergieanlagen, etc., eine wichtige Rolle spielen. Durch entsprechende Richtlinien der Europäischen Union (z.B. Erneuerbare Energie Richtlinie, Strombinnenmarktrichtlinie), welche auch als "Winterpaket" bezeichnet werden, soll eine Bildung von selbständigen Versorgungseinheiten, wie Energiegemeinschaften, beschleunigt und zukünftig ökonomisch gefördert werden. Eine Möglichkeit Energiegemeinschaften zu bilden, soll vor allem Endkunden in einem Stromversorgungsnetz dazu animieren, in Erzeugung erneuerbarer Energieformen zu investieren bzw. an Energiegemeinschaften teilzunehmen.

Das so genannte Mieterstrommodell stellt eine einfache Form einer gemeinschaftlichen Nutzung alternativer Energieerzeugungseinheiten dar. Dabei wird den Teilnehmern dieser Energiegemeinschaft die mittels der gemeinschaftlich betriebenen Energieerzeugungseinheit (z.B. Photovoltaik-Anlage, Kleinwasserkraftwerk, etc.) erzeugte Energie innerhalb eines Gebäudes und/oder einer Liegenschaft zu Verfügung gestellt - üblicherweise ohne Nutzung eines öffentlichen Verteilnetzes. Aus einem öffentlichen Stromversorgungsnetz (z.B. öffentlichen Niederspannungsnetz bzw. Ortsnetz) wird nur dann Energie bzw. Strom von einem Energieversorger bezogen, wenn die von der gemeinschaftlichen Energieerzeugungseinheit zur Verfügung gestellte Energie einen aktuellen Bedarf der Teilnehmer nicht decken kann. Die mittels der gemeinschaftlichen Energieerzeugungseinheit, meist einer Photovoltaik-Anlage, erzeugte Energie gilt es auf die teilnehmenden Endkunden im Gebäude bzw. auf der Liegenschaft aufzuteilen. Diese Aufteilung kann beispielsweise statisch oder dynamisch erfolgen.

Bei einer statischen Aufteilung wird jedem Teilnehmer des Mieterstrommodells ein jeweils vereinbarter Anteil an der von der gemeinschaftlichen Energieerzeugungseinheit erzeugten Energie zugeordnet. Wird dieser vom jeweiligen Teilnehmer nicht verbraucht, so wird die Energie bzw. der Strom in das öffentliche Stromversorgungsnetz eingespeist. Ein Nachteil der statischen Aufteilung besteht in einem niedrigen Eigenverbrauchsanteil, da eine Nutzung des zugeordneten Anteils zwischen den Teilnehmern bzw. Wohneinheiten stark variieren kann (z.B. urlaubsbedingt, Leerstände von Wohneinheiten, etc.). Der Eigenverbrauchsanteil beschreibt dabei jenen Anteil der im Mieterstrommodell erzeugten Energie, welche z.B. von Teilnehmern zeitgleich genutzt wird. Je höher der Eigenverbrauchsanteil ist, umso weniger erzeugte Energie bzw. erzeugter Strom wird über das Verteilnetz in das öffentliche Stromversorgungsnetz eingespeist.

Bei der dynamischen Aufteilung der durch die gemeinschaftlich genutzten Energieerzeugungseinheit (z.B. Photovoltaik-Anlage, etc.) erzeugten Energie wird diese so weit wie möglich bedarfsorientiert auf die Teilnehmer des Mieterstrommodells aufgeteilt. Damit wird zwar der Eigenverbrauchsanteil erhöht, dies führt aber zu komplexeren vertraglichen Regelungen, einer komplexeren Abrechnung und größeren abrechnungstechnischen Aufwand bei einem Betreiber der Messstellen - meist dem Betreiber des Verteilnetzes oder des öffentlichen Stromversorgungsnetzes, welcher Einspeisung ins Stromversorgungsnetz und Bezug aus dem Stromversorgungsnetz misst.

Eine weitere Möglichkeit Strom bzw. Energie für den Eigenbedarf gemeinschaftlich in einer Energiegemeinschaft zu erzeugen, untereinander zu verteilen und überschüssige Energie ins Stromversorgungsnetz einzuspeisen, sind so genannte Local Energy Communities oder kurz LEC. LECs sind selbstständige Versorgungseinheiten, welche eine oder mehrere Energieerzeugungseinheiten (z.B. Photovoltaik-Anlage, kleine Wasserkraftwerke, Kraft-Wärme-Kopplungsanlagen bzw. Blockheizkraftwerke, kleine Windkraftanlagen, etc.) sowie Lasten bzw. Verbraucher bei den Teilnehmern der LECs umfassen. LECs bilden ein lokales Netzgebiet, welches zumindest eine, in der Regel üblicherweise aber eine Vielzahl unabhängiger Übergabestellen zu einem übergeordneten, öffentlichen Stromversorgungsnetz bzw. Verteilnetz (z.B. Nieder- oder Mittelspannungsnetz) aufweist. Dabei kann die Energie bzw. der Strom zwischen dem LEC und dem übergeordneten Stromversorgungsnetz an der zumindest einen Übergabestelle ausgetauscht werden. D.h. es kann einerseits bei Überschuss Energie bzw. Strom in das übergeordnete Stromversorgungsnetz eingespeist und andererseits bei Bedarf Energie bzw. Strom aus dem übergeordneten Stromversorgungsnetz bezogen werden. Weiterhin sind LECs im Gegensatz zum Mieterstrommodell nicht durch Gebäude- und/oder Liegenschaftsgrenzen begrenzt. D.h. eine Energieverteilung ist auch über Gebäude- und/oder Liegenschaftsgrenzen hinweg erlaubt, wobei dazu Netzbereich (wie z.B. eine oder mehrere Teilstränge eines Orts- bzw. Niederspannungsnetzes, lokale (öffentliche) Verteilnetze, etc.) des Stromversorgungsnetzes zumindest teilweise genutzt werden kann.

Wird in einer LEC beispielsweise nur ein Typ von Energieerzeugungseinheiten - z.B. nur eine oder mehrere PhotovoltaikAnlagen - genutzt, so kann eine Aufteilung der im LEC erzeugten Energie sehr einfach analog zum oben beschrieben Mieterstrommodell erfolgen. D.h. die in der LEC erzeugte Energie wird entweder statisch nach einem vorher vereinbarten Schlüssel, welcher zusätzlich einem Betreiber des öffentlichen bzw. übergeordneten Stromversorgungs- bzw. Verteilnetzes bekanntgegeben werden muss, oder dynamisch (d.h. möglichst optimal im Vergleich zum tatsächlichen Eigennutzungsgrad der einzelnen LEC Teilnehmer) verteilt. Auch eine nachträgliche bilanzielle Abrechnung ist in diesem Fall relativ einfach durchzuführen - d.h. Aufteilung der in das Stromversorgungsnetz eingespeisten Energiemenge bzw. der aus dem Stromversorgungsnetz bezogenen Energiemenge auf die jeweiligen Teilnehmer der Energiegemeinschaft. Wie letztendlich auch die Energiemengen innerhalb der LEC bepreist werden, um z.B. eine Abschreibung der zumindest einen Erzeugungseinrichtung zu decken, oder z.B. festgelegt wird, wie z.B. mit Erlösen aus nicht direkt zuordenbaren Überschlussrückspeisungen umgegangen wird, ist dann Teil beispielsweise eines Geschäftsmodells oder eines Vereinsstatutes des jeweiligen LEC Betreibers.

Weiterhin können in Energiegemeinschaften - d.h. bei einem Mieterstrommodell oder einer LEC - gemeinschaftlich genutzte Energiespeichereinheiten (z.B. Batteriespeichersysteme, etc.) eingesetzt werden, um einen Eigennutzungsgrad bzw. den Eigenverbrauchsanteil zu erhöhen. Kommt nun in einer Energiegemeinschaft zumindest eine Energiespeichereinheit und/oder z.B. eine geregelte Energieerzeugungsanlage (z.B. Kraft-Wärme-Kopplungsanlage, Blockheizkraftwerk, etc.) zum Einsatz, so werden hochauflösende Messdaten benötigt, um ein entsprechendes Speichermanagement bzw. Regelung dieser Einheiten durchzuführen und um eine optimale Maximierung der Energieeigennutzung bzw. einen möglichst hohen Eigenverbrauchsanteil zu erreichen. D.h. die Energiespeichereinheit bzw. die geregelte Energieerzeugungsanlage müssen auf Basis von möglichst aktuellen Messwerten für Energieverbrauch, Energieverfügbarkeit, Energieüberschuss, etc. entsprechend angesteuert bzw. gemanagt werden, um z.B. bei Energieüberschuss in der Energiegemeinschaft die Energiespeichereinheit zu laden, bevor in das Stromversorgungs- bzw. Verteilnetz eingespeist wird bzw. bei hohen Energiebedarf zuerst Energie aus der Energiespeichereinheit zu beziehen, bevor Energie über das Stromversorgungs- bzw. Verteilnetz von einem Energieversorger bezogen wird.

Weiterhin ist nicht davon auszugehen, dass alle End- bzw. Netzkunden eines Gebäudes bzw. einer Liegenschaft am Mieterstrommodell oder alle End- bzw. Netzkunden, welche am von der LEC genutzten Netzbereich - d.h. am lokalen (öffentlichen) Verteil- bzw. Orts- oder Niederspannungsnetz - des Stromversorgungsnetzes angebunden sind, am LEC teilnehmen. D.h., nicht alle End- und Netzkunden, welche z.B. von einer Transformatorstation aus - als Ankopplungspunkt bzw. Übergabestelle an einen übergeordneten Netzbereich des Stromversorgungsnetzes (z.B. Niederspannungs- oder Mittelspannungsnetz) - mit Energie versorgt werden, sind auch Teilnehmer der Energiegemeinschaft bzw. der LEC. Daher können eine Energiespeichereinheit bzw. eine geregelte Energieerzeugungsanlage beispielsweise nicht einfach mittels einfacher Messungen am Ankopplungspunkt bzw. an der Übergabestelle zum übergeordneten Netzbereich des Stromversorgungsnetzes bzw. Verteilnetzes (d.h. beim Anschluss des Gebäudes bzw. der Liegenschaft an ein z.B. öffentliches Ortsnetz beim Mieterstrommodell oder in der Transformatorstation als Übergabestelle zum übergeordneten Netzbereich (z.B. Niederspannung - oder Mittelspannungsnetz) bei einer LEC) gesteuert und geregelt werden.

Eine Ausstattung aller Teilnehmer einer Energiegemeinschaft (z.B. Mieterstrommodell, LEC) beispielsweise mit entsprechenden Messgeräten, welche entsprechend hochauflösende Messdaten liefern, stellt ebenfalls keinen praktikablen Ansatz dar. Dies würde den Auf- und Ausbau von Energiegemeinschaften kostenintensiv und aufwendig gestalten. Es wäre auch vor allem mit hohen Anfangsinvestitionen verbunden, wodurch die Wirtschaftlichkeit der Energiegemeinschaft erheblich beeinträchtigt wäre. Insbesondere bei Bildung einer Energiegemeinschaft in einem bestehenden Versorgungsnetz wäre vor allem die nachträgliche Installation derartiger Messeinheiten bzw. Sensoreinheiten sowie die Inbetriebnahme sehr aufwendig. Weiterhin können Teilnehmer jederzeit zur Energiegemeinschaft neu hinzukommen oder diese verlassen, wobei jedes Mal Messeinheiten installiert oder deinstalliert und die Steuerung bzw. das Management der zumindest einen Energiespeichereinheit und/oder der zumindest einen geregelten Energieerzeugungseinheit entsprechend angepasst werden muss.

### Darstellung der Erfindung

Der Erfindung liegt daher die Aufgabe zugrunde, ein Verfahren zum Betreiben einer Energiegemeinschaft mit zumindest einer Energieerzeugungseinheit und zumindest einer Energiespeichereinheit anzugeben, durch welches mit geringem Installations- und Inbetriebnahmeaufwand ein möglichst hoher Eigennutzungsanteil der Energiegemeinschaft erzielt wird und welches bei Änderungen der Energiegemeinschaft, insbesondere Veränderungen einer Teilnehmeranzahl, leicht angepasst werden kann.

Diese Aufgabe wird durch ein Verfahren eingangs genannter Art mit den Merkmalen des unabhängigen Patentanspruchs gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zum Betreiben einer Energiegemeinschaft mit zumindest einer Energieerzeugungseinheit und zumindest einer Energiespeichereinheit eingangs erwähnter Art, bei welchem von der Energiegemeinschaft ein erster Netzbereich (z.B. lokales Verteilnetz in einem Gebäude oder auf einer Liegenschaft, zumindest Teile eines öffentlichen Orts- bzw. Niederspannungsnetzes, etc.) eines Stromversorgungsnetzes zumindest teilweise genutzt wird. Dabei weist der erste Netzbereich des Stromversorgungsnetzes zumindest eine Übergabestelle zu einem zweiten Netzbereich (z.B. einem übergeordneten Verteilnetz wie z.B. einem Nieder- bzw. Mittelspannungsnetz) des Stromversorgungsnetzes auf. An dieser zumindest einen Übergabestelle wird zwischen dem ersten Netzbereich und dem zweiten Netzbereich des Stromversorgungsnetzes Energie ausgetauscht. Für das Verfahren werden eine vom ersten Netzbereich des Stromversorgungsnetzes aus dem zweiten Netzbereich des Stromversorgungsnetzes bezogene Energiemenge gemessen und ein Energiebedarf der Energiegemeinschaft ermittelt. Darauf basierend wird ein Energiegemeinschaftsfaktor bestimmt. Anhand dieses Energiegemeinschaftsfaktors und einer zu einem jeweiligen Zeitpunkt aktuell gemessenen Energiemenge, welche vom ersten Netzbereich des Stromversorgungsnetzes an der zumindest einen Übergabestelle mit dem zweiten Netzbereich des Stromversorgungsnetzes ausgetauscht wird, wird eine zum jeweiligen Zeitpunkt aktuell mögliche Übergabeleistung der Energiegemeinschaft abgeschätzt. Die für den jeweiligen Zeitpunkt abgeschätzte, aktuell mögliche Übergabeleistung wird dann mit einer zum jeweiligen Zeitpunkt von der zumindest einen Energieerzeugungseinheit erzeugten Energiemenge verglichen. Daraus werden dann Steuerungsdaten für die zumindest eine Energiespeichereinheit der Energiegemeinschaft abgeleitet.

Der Hauptaspekt der erfindungsgemäß vorgeschlagenen Lösung besteht darin, dass bei einer nachträglichen Errichtung bzw. Installation einer Energiegemeinschaft in einem bereits bestehenden Stromversorgungsnetz ein möglichst geringer Installations- und Inbetriebnahmeaufwand notwendig ist. Aus verfügbaren Messdaten einer Energiemenge, welche im von der Energiegemeinschaft zumindest teilweise genutzten ersten Netzbereich des Stromversorgungsnetzes bezogen wird, und aus einem aus verfügbaren Messdaten und Lastprofilen ermittelbaren Energiebedarf der Energiegemeinschaft wird ein Energiegemeinschaftsfaktor bzw. Community-Faktor bestimmt, welcher sehr flexibel und ohne großen Aufwand an Veränderungen der Energiegemeinschaft - z.B. Änderungen in den Teilnehmer der Energiegemeinschaft, Änderungen bei genutzten Energieerzeugungseinheiten und/oder Energiespeichereinheiten, etc. - angepasst werden kann. Weiterhin ermöglicht das erfindungsgemäße Verfahren eine flexible und bedarfsorientierte Ansteuerung der zumindest einen Energiespeichereinheit der Energiegemeinschaft. Durch eine entsprechende Betriebsweise der zumindest einen Energiespeichereinheit auf Basis des Energiegemeinschaftsfaktors kann die zumindest eine Energiespeichereinheit damit möglichst optimal für eine Erhöhung des Eigennutzungsanteils der Energiegemeinschaft eingesetzt werden.

Für den Fall, dass die zumindest eine Energiespeichereinheit zum jeweils aktuellen Zeitpunkt gerade geladen oder entladen wird, ist es günstig, wenn die für den jeweiligen Zeitpunkt abgeschätzte, aktuell mögliche Übergabeleistung um einer jeweils aktuelle Energiemenge korrigiert wird, welche zum jeweiligen Zeitpunkt in die zumindest eine Energiespeichereinheit geladen wird oder aus der zumindest einen Energiespeichereinheit entnommen wird. Auf diese Weise werden idealerweise aktuelle Lade- oder Entladeenergiemengen der zumindest einen Energiespeichereinheit beim Ermitteln der Steuerdaten mitberücksichtigt.

Es ist vorteilhaft, wenn zumindest ein Messpunkt im ersten Netzbereich des Stromversorgungsnetzes festgelegt wird, an welchem die vom ersten Netzbereich des Stromversorgungsnetzes an der zumindest einen Übergabestelle aus dem zweiten Netzbereich des Stromversorgungsnetzes bezogene Energiemenge gemessen wird. Eine Definition von Messpunkten erfolgt dabei idealerweise derart, dass eine möglichst geringe Anzahl an Messpunkten verwendet wird. Damit brauchen nur wenige Messsensoreinheiten zum Erfassen von Messwerten einer vom ersten Netzbereich aus dem zweiten Netzbereich bezogenen Energiemenge installiert werden. Ein Installationsaufwand und ein Aufwand für eine Inbetriebnahme sowie damit verbundene Kosten werden auf diese Weise möglichst geringgehalten.

Bei einer Weiterentwicklung der Erfindung ist vorgesehen, dass nachträglich eine von der Energiegemeinschaft erzeugte Energiemenge gemäß einer von der Energiegemeinschaft verbrauchte Energiemenge auf jeweilige Teilnehmer der Energiegemeinschaft aufgeteilt wird. Bei einer nachträglichen, bilanziellen Abrechnung wird die von der Energiegemeinschaft erzeugte Energiemenge - d.h. die von der zumindest einen Energieerzeugungseinheit erzeugte Energie als auch eine Kapazität der zumindest einen Energiespeichereinheit - auf die jeweiligen Teilnehmer der Energiegemeinschaft beispielsweise gemäß einer vom jeweiligen Teilnehmer verbrauchten Energie bzw. Leistung anteilig oder gemäß statischen bzw. dynamischen Verfahren aufgeteilt. Da die Ermittlung des Energiegemeinschaftsfaktor eine Schätzung darstellt, kann es bei der nachträglichen, bilanziellen Abrechnung zu Abweichungen kommen. Diese Abweichungen können beispielswiese zu einer Art "Ausgleichsenergie" führen, welche den jeweiligen Teilnehmern der Energiegemeinschaft nach entsprechenden Verteilungsschlüsseln zugerechnet werden muss.

Idealerweise werden für eine Ermittlung des Energiebedarfs der Energiegemeinschaft zumindest gemessene Lastprofile der jeweiligen Teilnehmer der Energiegemeinschaft Energiegemeinschaftsteilnehmern, gemessene Erzeugungsprofile der zumindest einen Energieerzeugungseinheit und gemessene Lade- und/oder Entladeprofile der zumindest einen Energiespeichereinheit herangezogen. Die Lastprofile der jeweiligen Teilnehmer der Energiegemeinschaft können beispielsweise von einem Betreiber der Messstellen abgefragt werden. Die Rolle des Betreibers der Messstellen kann beispielsweise vom Betreiber des zweiten (übergeordneten) Netzbereichs des Stromversorgungsnetzes (z.B. des öffentlichen Orts- bzw. Niederspannungsnetzes, des Mittelspannungsnetzes, etc.) wahrgenommen werden. Dabei können die Lastprofile z.B. manuell für eine vorgebbaren Zeitraum angefordert werden oder z.B. über eine Schnittstelle abgefragt werden, sobald die Lastprofile in einem System des Betreibers des zweiten Netzbereichs des Stromversorgungs- bzw. Verteilnetzes vorliegen. Die Lastprofile der Energiegemeinschaftsteilnehmer werden in einfacher Weise mittels intelligenter Zählereinheiten - so genannten Smart Meter Einheiten - erfasst und z.B. über das Stromversorgungsnetz an den Betreiber des zweiten Netzbereichs des Stromversorgungsnetzes periodisch in bestimmten Zeitabständen (z.B. alle 15 Minuten) übermittelt. Die Erzeugungsprofile der zumindest einen Energieerzeugungseinheit und gemessene Lade- und/oder Entladeprofile der zumindest einen Energiespeichereinheit können beispielsweise sehr einfach mittels Messeinheiten bei der jeweiligen Einheit ermittelt und beispielsweise ebenfalls vom Betreiber des zweiten Netzbereichs des Stromversorgungsnetzes z.B. der Energiegemeinschaft bzw. einem Betreiber der Energiegemeinschaft zur Verfügung gestellt werden.

Es ist günstig, wenn der Energiegemeinschaftsfaktors statisch ermittelt wird. Dabei sind Umsetzung und Etablierung in einem zentralen Datenverwaltungssystem des Messstellenbetreibers bzw. des Managementsystems der Energiegemeinschaft, insbesondere der LEC, mit relativ wenig Aufwand verbunden, da insbesondere beim Messstellenbetreiber die erforderlichen Messdaten - d.h. die Daten der gesamten, an den erste Netzbereich des Stromversorgungsnetzes angeschlossenen Endkunden sowie die Daten jener Endkunden, welche an der Energiegemeinschaft teilnehmen, in Bezug auf die zumindest eine Übergabestelle bereits vorliegen. Für die statische Ermittlung werden die Lastprofile der Energiegemeinschaftsteilnehmer, aber auch die Profile der zumindest einen Energieerzeugungseinheit und der zumindest einen Energiespeichereinheit beispielsweise manuell vom Betreiber der Messstellen oder dem Betreiber des zweiten Netzbereichs angefordert bzw. abgefragt. Für die Berechnung des Energiegemeinschaftsfaktors kann dabei z.B. eine lineare Regression mit der so genannten Ordinary Least Squares Methode verwendet werden, bei welcher eine Summe von Fehlerquadraten minimiert wird. Die Fehlerquadrate beziehen sich dabei auf eine Summe der Messwerte aus der Energiegemeinschaft (z.B. Lastprofil der Smart Meter, Profile der Energieerzeugungseinheit und der Energiespeichereinheit) und den Messwerten der an Übergabestelle bezogenen Energiemenge multipliziert mit dem Energiegemeinschaftsfaktor. Dabei kann beispielsweise als Startwert bzw. als erster Energiegemeinschaftsfaktor - insbesondere bei sehr ähnlichen Verbrauchern an einem gemeinsamen Ankopplungs- bzw. Netzanschlusspunkt - im einfachsten Fall ein Verhältnis der Anzahl der Energiegemeinschaftsteilnehmer zu einer Gesamtzahl der im ersten Netzbereich des Stromversorgungsnetzes angeschlossenen Kunden angenommen werden. Bei einer Veränderung der Energiegemeinschaftsteilnehmer (z.B. neuer Teilnehmer kommt dazu, Teilnehmer steigt aus der Energiegemeinschaft aus) muss allerdings der Energiegemeinschaftsfaktor neu bestimmt werden.

Alternativ kann der Energiegemeinschaftsfaktors auch dynamisch ermittelt werden. Dazu können die Messdaten - d.h. Lastprofile der Teilnehmer und Profile der Energieerzeugungseinheit und der Energiespeichereinheit - beispielsweise über eine Schnittstelle automatisch vom Messstellenbetreiber abgerufen werden, sobald diese beim Betreiber der Messstellen verfügbar sind. D.h., die Messdaten einer vorgegebenen Zeitdauer (z.B. eines Tages, etc.) werden z.B. jeweils ab einem vorgegebenen Zeitpunkt (z.B. ab 8 Uhr an einem Folgetag für den gesamten vorhergehenden Tag) abgerufen. Mittels linearer Regression oder mittels entsprechender Lernalgorithmen und/oder Prognoseverfahren kann dann jeweils ein Energiegemeinschaftsfaktor z.B. für den Folgetag abgeschätzt werden. Eine dynamische Ermittlung des Energiegemeinschaftsfaktors weist dabei gegenüber eine statischen Ermittlung des Energiegemeinschaftsfaktors den Vorteil eine höheren Genauigkeit auf.

Es ist weiterhin günstig, wenn für einen jeweils vorgegebenen Zeitabschnitt ein eigener Energiegemeinschaftsfaktor ermittelt wird, welcher dann für die Ermittlung der Steuerdaten für die zumindest eine Energiespeichereinheit verwendet wird. Diese Vorgehensweise kann positive Auswirkungen auf die Genauigkeit haben. Dabei können beispielsweise für unterschiedliche Saisonen (z.B. Sommer, Winter, etc.) unterschiedliche Energiegemeinschaftsfaktoren ermittelt werden, um saisonale Unterschiede bei Energieerzeugung (z.B. unterschiedliche Sonneneinstrahlung, etc.) und/oder beim Energieverbrauch durch die Teilnehmer zu berücksichtigen. Ein Variante könnte auch sein, dass beispielsweise für Wochenenden, Feiertage, etc. eigene Energiegemeinschaftsfaktoren bestimmt werden, um unterschiedliches Teilnehmerverhalten zu berücksichtigen. Weiterhin ist denkbar, für kleinere Zeitabschnitte (z.B. von mehreren Stunden über eine Stunde bis zu Abschnitten von 15 Minuten) eigene Energiegemeinschaftsfaktoren bzw. einen Verlauf des Energiegemeinschaftsfaktors zu bestimmen. Dabei können z.B. Schwankungen in Energieerzeugung und/oder Energieverbrauch in der Energiegemeinschaft während des Tagesverlaufs (z.B. Tag/ Nacht, etc.) berücksichtigt werden. Diese Variante ist allerdings nur dann sinnvoll, wenn der Energiegemeinschaftsfaktor bzw. die zugrundeliegenden Messdaten über den Tagesverlauf sehr unterschiedlich sein können und wenn eine entsprechend ausreichende Messdatengrundlage zur Verfügung steht.

Ein bevorzugte Ausführungsform der Erfindung sieht vor, dass als zumindest eine Energieerzeugungseinheit eine Photovoltaik-Anlage verwendet wird. Dadurch kann die Energieerzeugung bei Bedarf sehr einfach erweitert bzw. angepasst werden. Weiterhin kann es vorteilhaft sein, wenn als zumindest eine Energiespeichereinheit der Energiegemeinschaft ein Batteriesystem oder Akku-System verwendet wird. Ein Batterie- oder Akku-System kann sehr einfach und schnell bei Bedarf an Speicherkapazität erweitert werden.

### Kurzbeschreibung der Zeichnung

Die Erfindung wird nachfolgend in beispielhafter Weise anhand der beigefügten Figuren erläutert. Es zeigen:
Figur 1 eine schematische Darstellung einer beispielhaften Energiegemeinschaft mit zumindest einer Energiespeichereinheit in einem Stromversorgungsnetz;
Figur 2 einen beispielhaften Ablauf des erfindungsgemäßen Verfahrens zum Betreiben einer Energiegemeinschaft mit zumindest einer Energiespeichereinheit

### Ausführung der Erfindung

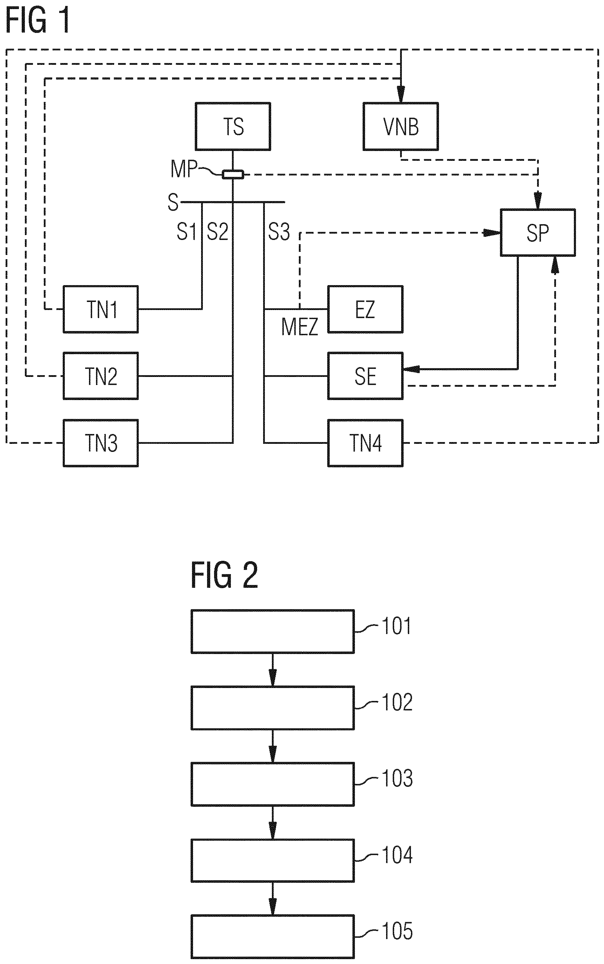

Figur 1 zeigt eine schematische Darstellung einer beispielhaften Energiegemeinschaft, wie z.B. einer Local Energy Community oder eines Mieterstrommodells. In Figur 1 ist ein schematisch dargestellter erster Netzbereich eines Stromversorgungsnetzes dargestellt. Ein derartiger erster Netzbereich kann z.B. ein Stromnetz in einem Gebäude/auf einer Liegenschaft, ein öffentliches Orts- bzw. Niederspannungsnetz, etc. sein. Der erste Netzbereich ist beispielsweise über einen Ankopplungspunkt TS mit einem zweiten (übergeordneten) Netzbereich des Stromversorgungsnetzes, wie z.B. einem öffentlichen Orts- bzw. Niederspannungsnetz bei einer Stromversorgung eines Gebäudes oder einer Liegenschaft, einem übergeordneten Nieder- oder Mittelspannungsnetz, etc., verbunden. Der zweite Netzbereich ist der Einfachheit halber in Figur 1 nicht im Detail dargestellt. Der Ankopplungspunkt TS kann z.B. ein Transformatorstation TS oder eine Anschlussstelle eines Gebäudes/einer Liegenschaft an z.B. ein (öffentliches) Ortsnetz sein, über welche als Übergabestelle TS zwischen dem ersten Netzbereich und dem zweiten (übergeordneten) Netzbereich des Stromversorgungsnetzes Energie ausgetauscht wird.

Der erste Netzbereich des Stromversorgungsnetzes weist beispielsweise eine Sammelschiene S auf, von welcher mehrere Netzstränge S1, S2, S3 abgehen. An die Netzstränge S1, S2, S3 sind beispielsweise Einheiten TN1, TN2, TN3, TN4 mit den Endkunden der Stromversorgung angebunden. Derartige Einheiten können beispielsweise Gebäude, wie z.B. Einfamilien- oder Mehrfamilienhäuser, Einheiten von Wohnanlagen oder Wohnblöcke, Gebäude auf einem Betriebsgelände, etc., sein. In dem beispielhaft dargestellten ersten Netzbereich des Stromversorgungsnetzes sind z.B. die Endkunden in einer ersten Einheit TN1 über einen ersten Netzstrang S1 und die Sammelschiene S an die Transformatorstation TS und damit mit dem zweiten Netzbereich des Stromversorgungsnetzes verbunden. Die Endkunden in einer zweiten Einheit TN2 und in einer dritten Einheit TN3 sind beispielsweise über einen zweiten Netzstrang S2 des ersten Netzbereichs und die Sammelschiene S an die Transformatorstation TS und an den zweiten Netzbereich des Stromversorgungsnetzes angebunden. Die Endkunden in einer vierten Einheit TN4 sind über einen dritten Netzstrang S3 des ersten Netzbereichs und die Sammelschiene S an die Transformatorstation TS und damit an des zweiten Netzbereich des Stromversorgungsnetzes angebunden.

Die in den Einheiten TN1, TN2, TN3, TN4 an den ersten Netzbereich und weiterhin an den zweiten (übergeordnete) Netzbereich des Stromversorgungsnetzes angebundenen Endkunden können nun beispielsweise Teilnehmer der Energiegemeinschaft sein oder ihren Energiebedarf direkt mittels Energiebezug aus dem zweiten Netzbereich decken. So können z.B. in der ersten Einheit TN1 25% der Endkunden Energiegemeinschaftsteilnehmer sein. In der zweiten Einheit TN2 können z.B. 20% der Endkunden Teilnehmer der Energiegemeinschaft sein. In der dritten Einheit TN3 können z.B. 45% der Endkunden Teilnehmer der Energiegemeinschaft sein und in der vierten Einheit TN4 können beispielsweise 90% der Endkunden an der Energiegemeinschaft teilnehmen.

Weiterhin weist die Energiegemeinschaft, welche den ersten Netzbereich des Stromversorgungsnetzes - d.h. z.B. die Netzstränge S1, S2, S3 - zumindest teilweise für einen Energieversorgung der Energiegemeinschaftsteilnehmer nutzt, zumindest eine beispielhafte dezentrale Energieerzeugungseinheit EZ auf. Diese Energieerzeugungseinheit EZ kann z.B. als Photovoltaik-Anlage ausgeführt sein. Es ist aber auch denkbar, dass ein kleines Wasserkraftwerk, eine kleine Windkraftanlage, ein Kraft-Wärmekopplungsanlage und/oder ein Blockheizkraftwerk als Energieerzeugungseinrichtung EZ vorgesehen ist. Weiterhin umfasst die Energiegemeinschaft zumindest eine Energiespeichereinheit SE, welche beispielsweise als Batteriesystem oder als Akku-System ausgeführt sein kann. Sowohl die Energieerzeugungseinrichtung EZ als auch die Energiespeichereinheit SE sind z.B. am dritten Netzstrang S3 des ersten Netzbereichs des Stromversorgungsnetz angebunden.

Weiterhin ist eine Steuereinheit SP vorgesehen, von welcher die zumindest eine Energiespeichereinheit SE, insbesondere Lade- und Entladevorgänge der Energiespeichereinheit SE, mittels Steuerungsdaten angesteuert werden. Diese Steuerungsdaten werden mit dem erfindungsgemäßen Verfahren bedarfsorientiert abgeleitet, welches in der Folge anhand von Figur 2 näher erläutert wird. Dazu werden für eine Ermittlung der Steuerungsdaten von der zumindest einen Energiespeichereinheit SE beispielsweise gemessene Lade-/Entladeprofile sowie gegebenenfalls Parameter, wie z.B. Speicherkapazität, Restkapazität, etc. der Steuereinheit SP zur Verfügung gestellt.

Weiterhin erhält die Steuereinheit SP gemessene Erzeugungsprofile (z.B. zeitlicher Verlauf einer erzeugten Energiemenge) der zumindest einen Energieerzeugungseinrichtung EZ der Energiegemeinschaft. Diese können z.B. an einem Messpunkt bzw. von einem Messsensor MEZ gemessen werden, welcher in einem Abzweig angebracht ist, über welchen die Energieerzeugungseinrichtung EZ mit dem dritten Netzstrang S3 bzw. mit dem ersten Netzbereich des Stromversorgungsnetzes verbunden wird.

Weiterhin werden von der Steuereinheit SP die Lastprofile der Teilnehmer der Energiegemeinschaft z.B. von einem üblicherweise zentralen Datensystem VNB eines Betreibers von Messstellen, welcher beispielsweise auch der Betreiber des zweiten (übergeordneten) Netzbereichs sein kann, manuell für vorgegebene Zeiträume oder über eine entsprechende Schnittstelle angefordert bzw. abgefragt, sobald die Lastprofile im Datensystem VNB des Verteilnetzbetreibers verfügbar sind. Diese Lastprofile können beispielsweise mittels intelligenter Zählereinheiten - so genannten Smart Meter, welche bei den Teilnehmern der Energiegemeinschaft angebracht sind, z.B. periodisch (z.B. alle 15 Minuten) erfasst und z.B. über das Stromversorgungsnetz an das Datensystem VNB weitergeleitet werden.

Weiterhin ist zumindest ein Messpunkt MP bzw. zumindest eine Messeinheit MP vorgesehen. Diese Messeinheit MP misst an dem zumindest einen Messpunkt MP im ersten Netzbereich des Stromversorgungsnetzes eine Energiemenge, welche vom ersten Netzbereich des Stromversorgungsnetzes z.B. über die Transformatorstation TS als Übergabestelle aus dem zweiten Netzbereich des Stromversorgungsnetzes bezogen wird. Die Messdaten können beispielsweise in Echtzeit als Realtime-Messdaten zu Verfügung gestellt werden. Werden von einer Energiegemeinschaft beispielsweise der gesamte, erste Netzbereich oder mehrere Netzstränge S1, S2, S3 des ersten Netzbereichs, wie in Figur 1 beispielhaft dargestellt, für die Energieversorgung der Energiegemeinschaftsteilnehmer genutzt, so kann dieser Messpunkt MP bzw. die Messeinheit MP beispielsweise hinter der Transformatorstation TS angebracht werden, welche den erstern Netzbereich mit dem zweiten (übergeordneten) Netzbereich des Stromversorgungsnetzes verbindet. Handelt es sich beispielsweise um eine Energiegemeinschaft, welche z.B. nur in einem Netzstrang S1, S2, S3 des ersten Netzbereichs des Stromversorgungsnetzes Teilnehmer aufweist, so kann der Messpunkt MP beispielsweise an einem Abgang der Sammelschiene S des entsprechenden Netzstrangs S1, S2, S3 vorgesehen und die entsprechende Messeinheit MP dort installiert werden. Sind beispielsweise zwei Netzstränge S1, S2, S3 von mehreren Netzsträngen Teil einer Energiegemeinschaft - wie z.B. der erste und der zweite Netzstrang S1, S2 des beispielhaft in Figur 1 dargestellten, ersten Netzbereichs, so kann es zweckmäßig sein, Messpunkte MP in den Abgängen dieser beiden Netzstränge S1, S2 zu definieren und dort die jeweiligen Messeinheiten MP zum Messen einer im jeweiligen Netzstrang bezogenen Energiemenge anzubringen.

Figur 2 zeigt nun einen beispielhaften Ablauf des erfindungsgemäßen Verfahrens zum Betreiben einer Energiegemeinschaft mit zumindest einer Energieerzeugungseinheit EZ und zumindest einer Energiespeichereinheit SE wie beispielhaft in Figur 1 dargestellt.

Für das Verfahren wird ein Messschritt 101 ausgeführt, bei welchem eine vom ersten Netzbereich des Stromversorgungsnetzes aus dem zweiten Netzbereich des Stromversorgungsnetzes bezogene Energiemenge gemessen wird. Die Messung dieser bezogenen Energiemenge erfolgt beispielsweise am zumindest einen Messpunkt MP bzw. durch die zumindest eine Messeinheit MP, welche am zumindest einen z.B. beim Einrichten der Energiegemeinschaft festgelegten Messpunkt MP (z.B. nach der Transformatorstation TS, in einem Abzweig eines Netzstrangs S1, S2, S3, etc.) angebracht wurde. Sind beispielsweise zwei oder mehrere Messpunkte MP festgelegt worden, da sich z.B. die Teilnehmer der Energiegemeinschaft auf zwei oder mehrere Netzstränge S1, S2, S3 konzentrieren, so müssen die an den Messpunkten MP gemessenen Werte z.B. summiert werden.

Weiterhin wird im Messschritt 101 ein Energiebedarf der Energiegemeinschaft bzw. der Teilnehmer der Energiegemeinschaft ermittelt bzw. abgeschätzt. Dazu werden zumindest die gemessenen Lastprofile der jeweiligen Teilnehmer der Energiegemeinschaft herangezogen. Die Lastprofiledaten können z.B. mittels intelligenter Zählereinheit bzw. Smart Meter periodisch (z.B. alle 15 Minuten) für eine genaue Abrechnung gemessen und beispielsweise vom Betreiber der Messstellen bzw. Messeinheiten in vorgegebenen Zeitabständen (z.B. einmal täglich) abgefragt werden. Die Lastprofile können dann z.B. der Energiegemeinschaft bzw. einem Betreiber einer Energiegemeinschaft zur Verfügung gestellt werden. Weiterhin können bei der Ermittlung des Energiebedarfs der Energiegemeinschaft bereits gemessene Erzeugungsprofile der zumindest einen Energieerzeugungsanlage EZ sowie bereits aufgezeichnete, historische Lade- und Entladeprofile der zumindest einen Energiespeichereinheit SE der Energiegemeinschaft berücksichtigt werden.

In einem Ermittlungsschritt 102 wird dann auf Basis der gemessenen Energiemenge, welche aus dem zweiten Netzbereich des Stromversorgungsnetzes vom ersten Netzbereich des Stromversorgungsnetzes bezogen wird, und des ermittelten Energiebedarfs der Energiegemeinschaft ein Energiegemeinschaftsfaktor oder Communitiy-Faktor abgeleitet. Dieser Energiegemeinschaftsfaktor kann je nach geforderter Qualität und vorliegenden Daten (z.B. Lastprofilen, etc.) bestimmt werden. Im einfachsten Fall oder als Startwert kann als Energiegemeinschaftsfaktor ein Verhältnis aus einer Anzahl der Teilnehmer der Energiegemeinschaft zu einer Gesamtanzahl der im ersten Netzbereich des Stromversorgungsnetzes angeschlossenen Endkunden angenommen werden, wenn es sich um sehr ähnliche Verbraucher handelt, welche an dem gemeinsamen Ankopplungspunkt TS angeschlossen sind.

Für eine weitere und/oder genauere Abschätzung kann der Energiegemeinschaftsfaktor im Ermittlungsschritt 102 z.B. statisch ermittelt werden. Bei einer statischen Ermittlung können die Lastprofile der Energiegemeinschaftsteilnehmer, aber auch die Profile der zumindest einen Energieerzeugungseinheit und der zumindest einen Energiespeichereinheit beispielsweise für einen vorgebbaren Zeitraum manuell vom Datensystem VNB des Betreibers der Messstellen, welcher auch der Betreiber des zweiten (übergeordneten) Netzbereichs des Stromversorgungsnetzes sein kann, angefordert werden. Die Berechnung des Energiegemeinschaftsfaktors kann z.B. mittels linearer Regression mit der so genannten Ordinary Least Squares Methode erfolgen. Bei Veränderungen der Energiegemeinschaft - wenn z.B. ein neuer Teilnehmer dazukommt oder ein Teilnehmer die Energiegemeinschaft verlässt, etc., muss der Energiegemeinschaftsfaktor neu bestimmt werden. Weiterhin können bei einer statischen Ermittlung des Energiegemeinschaftsfaktors die Lastprofile z.B. mehrmals pro Saison abgefragt werden, um z.B. einen Energiegemeinschaftsfaktor für Sommer und einen Energiegemeinschaftsfaktor für Winter zu ermitteln, um einen saisonal unterschiedlichen Energiebedarf der Energiegemeinschaftsteilnehmer zu berücksichtigen. Es besteht auch die Möglichkeit, dass spezielle Energiegemeinschaftsfaktoren für z.B. Wochenenden, Feiertage, etc. berechnet werden, um z.B. eine unterschiedliche Energienutzung der Teilnehmer der Energiegemeinschaft zu berücksichtigen. Im Extremfall könnte der Energiegemeinschaftsfaktor beispielsweise - bei entsprechender Datenlagen und Anforderung der Daten - als Verlauf ermittelt werden, wobei für jeden Zeitpunkt der Lastprofile (z.B. alle 15 Minuten im Tagesverlauf), ein neuer Energiegemeinschaftsfaktorwert (z.B. 96 unterschiedliche Energiegemeinschaftsfaktoren pro Tag) bestimmt werden können. In abgeschwächter Form können z.B. Tages- und Nachtverhalten bei der Energienutzung der Energiegemeinschaftsteilnehmer berücksichtigt werden, indem beispielsweise zwei unterschiedliche Community-Faktoren z.B. für Tag und Nacht ermittelt werden.

Alternativ kann der Energiegemeinschaftsfaktor im Ermittlungsschritt 102 für eine noch genauere Abschätzung z.B. auch dynamisch ermittelt werden. Eine dynamische Ermittlung ist möglich, wenn Messdaten - d.h. Lastprofile der Teilnehmer und Profile der zumindest einen Energieerzeugungseinheit EZ und der zumindest einen Energiespeichereinheit SE - beispielsweise über eine Schnittstelle vom zentralen Datensystem VNB des Betreibers der Messstellen bzw. des zweiten Netzbereichs abgerufen werden können. Dabei werden die jeweiligen Messdaten (z.B. Lastprofile der Teilnehmer, etc.) einer vorgegebene Zeitdauer (z.B. für einen Tag) beispielsweise z.B. jeweils ab einem vorgegebenen Zeitpunkt (z.B. ab 8 Uhr an einem Folgetag für den gesamten vorhergehenden Tag) vom zentralen Datensystem VNB abgerufen. Mittels linearer Regression oder mittels entsprechender Lernalgorithmen und/oder Prognoseverfahren kann dann jeweils ein Energiegemeinschaftsfaktor z.B. für den jeweiligen Folgetag abgeschätzt werden. Auch bei der dynamischen Ermittlung des Energiegemeinschaftsfaktors besteht die Möglichkeit, z.B. im Extremfall den Energiegemeinschaftsfaktor beispielsweise - bei entsprechender Datenabfrage - als Verlauf zu ermitteln, wobei für jeden Zeitpunkt, zu dem Lastprofile der Teilnehmer vorliegen bzw. im Datensystem VNB des Betreibers des zweiten Stromversorgungsnetzes verfügbar sind (z.B. alle 15 Minuten im Tagesverlauf), ein neuer Energiegemeinschaftsfaktor bestimmt wird. In abgeschwächter Form können z.B. Tages- und Nachtverhalten bei der Energienutzung der Energiegemeinschaftsteilnehmer durch unterschiedliche Energiegemeinschaftsfaktoren für z.B. vorgegebene Zeitabschnitte (z.B. Wochenenden, Feiertage, etc. oder für mehrere Stunden eines Tages, wie z.B. Tagesstunden, Nachstunden, etc.) berücksichtigt werden.

Nach Ermittlung des Community-Faktor im Ermittlungsschritt 102, wird in einem Abschätzschritt 103 anhand des ermittelten Energiegemeinschaftsfaktors und anhand einer zu einem jeweiligen Zeitpunkt aktuell gemessenen Energiemenge, welche vom ersten Netzbereich des Stromversorgungsnetzes an der zumindest einen Übergabestelle mit dem zweiten Netzbereich des Stromversorgungsnetzes ausgetauscht wird, eine zum jeweiligen Zeitpunkt aktuell mögliche Übergabeleistung der Energiegemeinschaft abgeschätzt. D.h., die zumindest eine Messeinheit MP, welche am beim Einrichten der Energiegemeinschaft am zumindest einen Messpunkt MP angebracht wurde, liefert z.B. in Echtzeit eine aktuell am zumindest einen festgelegten Messpunkt MP gemessene Energiemenge. Über den ermittelten Energiegemeinschaftsfaktor kann dann eine zum jeweiligen Zeitpunkt aktuelle (fiktive) Übergabeleistung der Energiegemeinschaft mit dem zweiten Netzbereich des Stromversorgungsnetzes abgeschätzt werden.

In einem Vergleichsschritt 104 wird dann die abgeschätzte, zum jeweiligen Zeitpunkt aktuell mögliche bzw. verfügbare Übergabeleistung mit einer zum jeweiligen Zeitpunkt von der zumindest einen Energieerzeugungseinheit EZ erzeugten Energiemenge verglichen. Dann werden in einem Ableitungsschritt 105 Steuerungsdaten für die zumindest eine Energiespeichereinheit SE der Energiegemeinschaft abgeleitet.

Für den Fall, dass die zumindest eine Energiespeichereinheit SE zum jeweiligen Zeitpunkt aktuell geladen oder entladen wird, kann die abgeschätzte, aktuell mögliche Übergabeleistung um eine jeweils aktuelle Energiemenge korrigiert werden, welche zum jeweiligen Zeitpunkt in die zumindest eine Energiespeichereinheit SE geladen bzw. aus dieser entnommen wird. Dazu kann beispielsweise die jeweils aktuelle Lade- bzw. Entlademenge an der Speichereinheit gemessen werden und der aktuell Messwert der in die Energiespeichereinheit SE geladenen bzw. aus der Energiespeichereinheit SE entnommenen Energiemenge von der abgeschätzte, aktuell mögliche Übergabeleistung abgezogen werden. Im Vergleichsschritt 104 wird dann die um die Lade- oder Entladeenergie der zumindest einen Energiespeichereinheit SE korrigierte, abgeschätzte aktuell mögliche Übergabeleistung mit der zum jeweiligen Zeitpunkt von der zumindest einen Energieerzeugungseinheit EZ erzeugten Energiemenge verglichen. Dadurch können im Ableitungsschritt 105 die Steuerungsdaten an ein aktuelles Laden bzw. Entladen der zumindest einen Energiespeichereinheit SE angepasst werden und eine aktuell in die Energiespeichereinheit SE geladene bzw. aktuell aus der Energiespeichereinheit SE entnommene Energiemenge beim Ermitteln der Steuerdaten berücksichtigt werden. Diese Korrektur kann z.B. entfallen, wenn beispielsweise der zumindest eine Messpunkt der Energiegemeinschaft physikalisch in einem anderen Netzstrang S1, S2 angeordnet ist als in dem Netzstrang S3, an welchen die zumindest eine Energiespeichereinheit SE angeschlossen ist.

Mittels der Steuerungsdaten kann dann die Steuereinheit SP beispielsweise Lade- und Entladevorgänge der zumindest einen Energiespeichereinheit SE unter Berücksichtigung eines aktuellen Ladestatus (z.B. bis auf Restkapazität geladen, teilweise oder voll aufgeladen) der zumindest einen Energiespeichereinheit SE und gegebenenfalls unter Berücksichtigung von aktuell laufenden Lade- oder Entladevorgängen angesteuert werden. So kann beispielsweise die Energiespeichereinheit SE bis zu einer maximalen Speicherkapazität aufgeladen werden, wenn aktuell die von der zumindest einen Energieerzeugungseinheit EZ produzierte Energiemenge über der aktuell abgeschätzten Übergabeleistung der Energiegemeinschaft liegt und die zumindest eine Energiespeichereinheit noch nicht voll aufgeladen ist. Ist die zumindest eine Energiespeichereinheit SE aufgeladen, kann z.B. von der Energiegemeinschaft erzeugte, aber nicht benötigte Energie in den zweiten (übergeordnete) Netzberiech des Stromversorgungsnetzes über die Übergabestelle TS eingespeist werden. Weiterhin kann beispielsweise die zumindest eine Energiespeichereinheit SE, z.B. sofern eine ausreichende Restkapazität und Speicherentladeleistung vorhanden ist, entladen werden, um einen aktuelle Energiebedarf der Energiegemeinschaft zu decken, wenn z.B. die von der zumindest einen Energieerzeugungseinheit EZ produzierte Energiemenge unter der aktuell abgeschätzten Übergabeleistung der Energiegemeinschaft liegt. Ist beispielsweise die zumindest eine Energiespeichereinheit SE dann (bis auf eine Restkapazität) entladen, kann zusätzlich von der Energiegemeinschaft aus dem zweiten (übergeordneten) Netzbereich des Stromversorgungsnetzes Energie bezogen werden.

Weiterhin kann durch im Ableitungsschritt 105 entsprechend abgeleitete Steuerdaten die zumindest eine Energiespeichereinheit SE beispielsweise zu günstigen Zeitabschnitten - d.h. bei wenig Verbrauch in der Energiegemeinschaft, wie z.B. nachmittags, nachts, etc. und bei geringer Energieerzeugung durch die zumindest eine Energieerzeugungseinheit EZ aus dem zweiten Netzbereich geladen werden. Dadurch kann beispielsweise von der zumindest einen Energiespeichereinheit SE dann zu Zeiten mit sehr hohen oder hohen Verbrauch in der Energiegemeinschaft (z.B. Abendspitze, etc.) eine vorgegebene Übergabeleistung zur Verfügung gestellt werden. Weiterhin kann die zumindest eine Energiespeichereinheit SE z.B. derart angesteuert werden, dass gewisse Überschüsse oder Flexibilitäten aus der Energiespeichereinheit SE bei entsprechenden Markttarifen angeboten und z.B. über den zweite Netzbereich im Stromversorgungsnetz zur Verfügung gestellt werden können.

Bei einer nachträglichen, bilanziellen Abrechnung wird die von der Energiegemeinschaft erzeugte Energiemenge - d.h. die von der zumindest einen Energieerzeugungseinheit erzeugte Energie als auch eine von der zumindest eine Energiespeichereinheit SE entladene Energie - auf die jeweiligen Teilnehmer der Energiegemeinschaft beispielsweise gemäß eines vorgegebenen Verteilungsschlüssels gemäß eines statischen oder dynamischen Verfahren aufgeteilt. Da die Ermittlung des Energiegemeinschaftsfaktor im Ermittlungsschritt 102 eine Schätzung darstellt, kann es bei der nachträglichen, bilanziellen Abrechnung zu Abweichungen kommen. Diese Abweichungen können beispielswiese zu einer Art "Ausgleichsenergie" führen, welche den jeweiligen Teilnehmern der Energiegemeinschaft nach entsprechenden Verteilungsschlüsseln zugerechnet werden muss.

## Patentansprüche

1. Verfahren zum Betreiben einer Energiegemeinschaft mit zumindest einer Energieerzeugungseinheit (EZ) und zumindest einer Energiespeichereinheit (SE), von welcher ein erster Netzbereich (S1, S2, S3) eines Stromversorgungsnetzes zumindest teilweise genutzt wird, wobei der erste Netzbereich (S1, S2, S3) zumindest eine Übergabestelle (TS) zu einem zweiten Netzbereich des Stromversorgungsnetzes aufweist, an welcher Energie mit dem zweiten Netzbereich des Stromversorgungsnetzes ausgetauscht wird, ***dadurch gekennzeichnet, dass*** eine vom ersten Netzbereich (S1, S2, S3) des Stromversorgungsnetzes aus dem zweiten Netzbereich des Stromversorgungsnetzes bezogene Energiemenge gemessen und ein Energiebedarf der Energiegemeinschaft ermittelt werden (101),
- dass auf Basis der gemessenen Energiemenge, welche aus dem zweiten Netzbereich des Stromversorgungsnetzes vom ersten Netzbereich (S1, S2, S3) des ersten Stromversorgungsnetzes bezogen wird, und des ermittelten Energiebedarfs der Energiegemeinschaft ein Energiegemeinschaftsfaktor bestimmt wird (102),
- dass anhand des Energiegemeinschaftsfaktors und einer zu einem jeweiligen Zeitpunkt aktuell gemessenen Energiemenge, welche vom ersten Netzbereich (S1, S2, S3) des Stromversorgungsnetzes an der zumindest einen Übergabestelle (TS) mit dem zweiten Netzbereich des Stromversorgungsnetzes ausgetauscht wird, eine zum jeweiligen Zeitpunkt aktuell mögliche Übergabeleistung der Energiegemeinschaft abgeschätzt wird (103),
- dass die für den jeweiligen Zeitpunkt abgeschätzte, aktuell mögliche Übergabeleistung mit einer zum jeweiligen Zeitpunkt von der zumindest einen Energieerzeugungseinheit (EZ) erzeugten Energiemenge verglichen wird (104),
- und dass daraus Steuerungsdaten für die zumindest eine Energiespeichereinheit (SE) der Energiegemeinschaft abgeleitet werden (105).

2. Verfahren nach Anspruch 1, ***dadurch gekennzeichnet, dass*** die für den jeweiligen Zeitpunkt abgeschätzte, aktuell mögliche Übergabeleistung um einer jeweils aktuelle Energiemenge korrigiert wird (104), welche zum jeweiligen Zeitpunkt in die zumindest eine Energiespeichereinheit (SE) geladen wird oder aus der zumindest einen Energiespeichereinheit (SE) entnommen wird.

3. Verfahren nach einem der Ansprüche 1 bis 2, ***dadurch gekennzeichnet, dass*** zumindest ein Messpunkt (MP) festgelegt wird, an welchem die vom ersten Netzbereich (S1, S2, S3) des Stromversorgungsnetzes aus dem zweiten Netzbereich des Stromversorgungsnetzes bezogene Energiemenge gemessen wird.

4. Verfahren nach einem der Ansprüche 1 bis 3, ***dadurch gekennzeichnet, dass*** nachträglich eine von der Energiegemeinschaft erzeugte Energiemenge gemäß einer verbrauchte Energiemenge auf jeweilige Teilnehmer der Energiegemeinschaft aufgeteilt wird.

5. Verfahren nach einem der Ansprüche 1 bis 4, ***dadurch gekennzeichnet, dass*** für eine Ermittlung des Energiebedarfs der Energiegemeinschaft zumindest gemessene Lastprofile der jeweiligen Teilnehmer der Energiegemeinschaft, gemessene Erzeugungsprofile der zumindest einen Energieerzeugungseinheit (EZ) und gemessene Lade- und/oder Entladeprofile der zumindest einen Energiespeichereinheit (SE) herangezogen werden (101).

6. Verfahren nach Anspruch 5, ***dadurch gekennzeichnet, dass*** die Lastprofile der jeweiligen Teilnehmer der Energiegemeinschaft periodisch mittels intelligenter Zählereinheiten erfasst werden (101).

7. Verfahren nach einem der Ansprüche 1 bis 6, ***dadurch gekennzeichnet, dass*** der Energiegemeinschaftsfaktors statisch ermittelt wird (102).

8. Verfahren nach einem der Ansprüche 1 bis 6, ***dadurch gekennzeichnet, dass*** der Energiegemeinschaftsfaktors dynamisch ermittelt wird (102).

9. Verfahren nach einem der vorangegangenen Ansprüchen, ***dadurch gekennzeichnet, dass*** für einen jeweils vorgegebenen Zeitabschnitt ein eigener Energiegemeinschaftsfaktor ermittelt wird (102).

10. Verfahren nach einem der vorangegangenen Ansprüchen, ***dadurch gekennzeichnet, dass*** als zumindest eine Energieerzeugungseinheit (EZ) eine Photovoltaik-Anlage verwendet wird.

11. Verfahren nach einem der vorangegangenen Ansprüchen, ***dadurch gekennzeichnet, dass*** als zumindest eine Energiespeichereinheit (SE) ein Batteriesystem oder Akku-System verwendet wird.
